# EUROPEAN PATENT APPLICATION

(11) **EP 2 634 082 A1**
(43) Date of publication of application: **04.09.2013**
(21) Application number: 11836170.8
(22) Date of filing: 21.10.2011
(51) Int. Cl.: B63B 49/00, G08G 3/00

(54) **NAVIGATION AID SYSTEM**

(30) Priority: 29.10.2010 JP 2010244064
(71) Applicant: Mitsubishi Heavy Industries, Ltd., Tokyo 108-8215 (JP)
(72) Inventor: MURATA, Satoru, Tokyo 108-8215 (JP); HIGUCHI, Jun, Tokyo 108-8215 (JP)
(74) Representative: HOFFMANN EITLE
(86) International application number: PCT/JP2011/074336
(87) International publication number: WO 2012/057036

(57) **Abstract**

The burden on crewmembers is reduced and a risk of violating regulations due to human errors is also reduced. The present invention is equipped with an environment-regulated-marine-zone detection device (3) which includes a movement tracking device that tracks the movement of a ship based on input data; a first computation device that computes an arrival distance and a arrival time until arriving at an environment regulated marine zone or a departure distance and a departure time until departing from an environment regulated marine zone based on data transmitted from the movement tracking device, as well as data about the environment regulated marine zone in a built-in database of the first computation device or data about the environment regulated marine zone in a built-in database of another external device; and a display device that displays the arrival distance and the arrival time until arriving at the environment regulated marine zone or the departure distance and the departure time until departing from the environment regulated marine zone based on the data transmitted from the first computation device.

## Description

### {Technical Field}

The present invention relates to a navigation assistance system.

### {Background Art}

Among navigation assistance systems, there is a known navigation assisting device that facilitates selection of an optimal navigation route for a navigating ship and decision making in maneuvering the ship by displaying information about weather and oceanographic conditions in a superimposed manner on an electronic navigational chart (see Patent Literature 1).

### {Citation List}

### {Patent Literature}

{PTL 1} Japanese Unexamined Patent Application, Publication No. Hei 6-201394

### {Summary of Invention}

### {Technical Problem}

In recent years, from the viewpoint of environmental protection, environment regulated marine zones, such as an engine-exhaust-gas regulated marine zone (ECA: Emission Control Area), a ballast water regulated marine zone, and so forth, have been established, and discharging of NOx, SOx, ballast water, precipitated substances, and so forth is restricted within these environment regulated marine zones.
In addition, in the engine-exhaust-gas regulated marine zones, there are plans to further tighten the regulations on exhaust gas in the near future, and, in order to comply with the new regulations, preparatory work needs to be performed before entering the engine-exhaust-gas regulated marine zone, such as changing the fuel oil used in a main engine and a generator engine from general fuel oil to low-sulfur fuel oil, changing the fuel injection modes (operating modes) of the main engine and the generator engine from, for example, injection of fuel oil alone to injection of an emulsion (emulsified liquid) in which the fuel oil and water are mixed, activating a heater for heating the catalyst of a urea-SCR (Selective Catalytic Reduction) system (exhaust-gas treating device), and so forth. Accordingly, it is likely that the burden on crewmembers (engineers and engine-room workers in particular) will be increased further.

The present invention has been conceived in order to solve the above-described problems, and an object thereof is to provide a navigation assistance system with which the burden on crewmembers can be reduced and a risk of violating regulations due to human errors can be reduced.

### {Solution to Problem}

In order to achieve the above-described object, the present invention employs the following solutions.
A navigation assistance system according to a first aspect is equipped with an environment-regulated-marine-zone detection device which includes a movement tracking device that tracks the movement of a ship based on input data; a first computation device that computes an arrival distance and an arrival time until arriving at an environment regulated marine zone or a departure distance and a departure time until departing from an environment regulated marine zone based on the data transmitted from the movement tracking device, as well as data about the environment regulated marine zone in a built-in database of the first computation device or data about the environment regulated marine zone in a built-in database of another external device; and a display device that displays the arrival distance and the arrival time until arriving at the environment regulated marine zone or the departure distance and the departure time until departing from the environment regulated marine zone based on data transmitted from the first computation device.

With the navigation assistance system according to the first aspect of the present invention, the arrival distance and the arrival time until arriving at an environment regulated marine zone or the departure distance and the departure time until departing from an environment regulated marine zone are automatically computed by the first computation device of the environment-regulated-marine-zone detection device and are automatically displayed on the display device of the environment-regulated-marine-zone detection device.
By doing so, merely by viewing the display device, crewmembers can instantly ascertain the arrival distance and the arrival time until arriving at an environment regulated marine zone or the departure distance and the departure time until departing from an environment regulated marine zone, and they can appropriately and quickly perform various preparatory work that needs to be done in advance before entering the environment regulated marine zone or before leaving the environment regulated marine zone; as a result, the burden on the crewmembers can be reduced, making it possible to reduce a risk of violating regulations due to human errors.

It is more preferable that the above-described navigation assistance system be equipped with a regulated-marine-zone navigation control device which includes a second computation device that computes a time at which a regulated-marine-zone navigation auxiliary device should be started up when entering an environment regulated marine zone from an area outside the environment regulated marine zone based on data transmitted from the environment-regulated-marine-zone detection device, as well as data about preparatory work in a built-in database of the second computation device; and a control-signal outputting device that outputs a control signal to the regulated-marine-zone navigation auxiliary device based on data transmitted from the second computation device, wherein the regulated-marine-zone navigation auxiliary device is automatically started up based on the control signal.

With such a navigation assistance system, as the preparatory work before entering an environment regulated marine zone, the regulated-marine-zone navigation auxiliary device (for example, exhaust-gas treating device) is automatically started up.
By doing so, the burden on the crewmembers can be reduced further, making it possible to further reduce a risk of violating regulations due to human errors.

In the above-described navigation assistance system, it is more preferable that the second computation device include a function for computing a time at which the regulated-marine-zone navigation auxiliary device should be shut down when leaving the environment regulated marine zone and entering an area outside the environment regulated marine zone based on data transmitted from the environment-regulated-marine-zone detection device, as well as data about preparatory work in the built-in database of the second computation device; that the control-signal outputting device include a function for outputting a control signal to the regulated-marine-zone navigation auxiliary device based on the data transmitted from the second computation device; and that the regulated-marine-zone navigation auxiliary device be automatically shut down based on the control signal.

With such a navigation assistance system, as the preparatory work before leaving an environment regulated marine zone, the regulated-marine-zone navigation auxiliary device (for example, exhaust-gas treating device) is automatically prepared for shut down.
By doing so, the burden on the crewmembers can be reduced further, making it possible to further reduce a risk of violating regulations due to human errors.

In the above-described navigation assistance system, it is more preferable that the second computation device compute a time at which switching of various valves for navigating in a regulated marine zone should be started; that the control-signal outputting device output control signals to the various valves for navigating in the regulated marine zone; and that the various valves for navigating in the regulated marine zone be switched based on the control signals.

With such a navigation assistance system, the various valves for navigating in a regulated marine zone (for example, a flow-path switching valve between fuel storage tanks and a valve for a urea supply pipe) are automatically switched.
By doing so, the burden on the crewmembers can be reduced further, making it possible to further reduce a risk of violating regulations due to human errors.

In the above-described navigation assistance system, it is more preferable that operating modes of a main engine and/or a generator engine be automatically changed based on control signals output from the control-signal outputting device.

With such a navigation assistance system, as the preparatory work before entering an environment regulated marine zone (and the preparatory work before leaving an environment regulated marine zone), the operating modes (for example, fuel injection modes) of the main engine and/or the generator engine are automatically changed.
By doing so, the burden on the crewmembers can be reduced further, making it possible to further reduce a risk of violating regulations due to human errors.

In the above-described navigation assistance system, it is more preferable that driving sources of a propulsion propeller be automatically changed from the main engine to a shaft generator motor or from the shaft generator motor to the main engine based on control signals output from the control-signal outputting device.

With such a navigation assistance system, as the preparatory work before entering an environment regulated marine zone, the driving sources of the propulsion propeller are automatically changed from the main engine to the shaft generator motor (and, as the preparatory work before leaving an environment regulated marine zone, the driving sources of the propulsion propeller are automatically changed from the shaft generator motor to the main engine).
By doing so, the burden on the crewmembers can be reduced further, making it possible to further reduce a risk of violating regulations due to human errors.

It is more preferable that the above-described navigation assistance system be additionally provided with a recording device that records a log of control signals output from the control-signal outputting device, an operating log of the regulated-marine-zone navigation auxiliary device, operating modes of the main engine and the generator engine, and an operating log of the main engine, the generator engine, and/or the shaft generator motor.

With such a navigation assistance system, because the operating states of the main engine and the various auxiliary equipment in the environment regulated marine zones are recorded in detail, it is easy to provide evidence of the operating states of the main engine and the various auxiliary equipment in the environment regulated marine zones.

A ship according to a second aspect of the present invention is equipped with one of the navigation assistance systems described above.

The ship according to the second aspect of the present invention is equipped (provided) with a navigation assistance system in which the arrival distance and the arrival time until arriving at an environment regulated marine zone or the departure distance and the departure time until departing from an environment regulated marine zone are automatically computed by the first computation device of the environment-regulated-marine-zone detection device and are automatically displayed on the display device of the environment-regulated-marine-zone detection device.
By doing so, merely by viewing the display device, crewmembers can instantly ascertain the arrival distance and the arrival time until arriving at an environment regulated marine zone or the departure distance and the departure time until departing from an environment regulated marine zone, and they can appropriately and quickly perform various preparatory work that needs to be done in advance before entering the environment regulated marine zone or before leaving the environment regulated marine zone; as a result, the burden on the crewmembers can be reduced, making it possible to reduce a risk of violating regulations due to human errors.

A ship operating method according to a third aspect of the present invention includes manually starting up a regulated-marine-zone navigation auxiliary device based on an arrival time until arriving at an environment regulated marine zone displayed on the above-described display device and manually switching various valves for navigating in a regulated marine zone.

With the ship operating method according to the third aspect of the present invention, the arrival distance and the arrival time until arriving at an environment regulated marine zone are automatically computed by the first computation device of the environment-regulated-marine-zone detection device and are automatically displayed on the display device of the environment-regulated-marine-zone detection device.
By doing so, merely by viewing the display device, crewmembers can instantly ascertain the arrival distance and the arrival time until arriving at an environment regulated marine zone, and they can appropriately and quickly start up the regulated-marine-zone navigation auxiliary device (for example, exhaust-gas treating device) and switch the various valves (for example, a flow-path switching valve between fuel storage tanks and a valve for a urea supply pipe), which need to be done in advance before entering the environment regulated marine zone; as a result, the burden on the crewmembers can be reduced, making it possible to reduce a risk of violating regulations due to human errors.

A ship operating method according to a fourth aspect of the present invention includes manually shutting down a regulated-marine-zone navigation auxiliary device based on a departure time until departing from an environment regulated marine zone displayed on the above-described display device; and manually switching various valves for normal navigation.

With the ship operating method according to the fourth aspect of the present invention, the departure distance and the departure time until departing from an environment regulated marine zone are automatically computed by the first computation device of the environment-regulated-marine-zone detection device and are automatically displayed on the display device of the environment-regulated-marine-zone detection device.
By doing so, merely by viewing the display device, crewmembers instantly ascertain the departure distance and the departure time until departing from an environment regulated marine zone, and they can appropriately and quickly prepare to shut down the regulated-marine-zone navigation auxiliary device (for example, exhaust-gas treating device) and switch the various valves (for example, a flow-path switching valve between fuel storage tanks and a valve for a urea supply pipe), which need to be done in advance before leaving the environment regulated marine zone; as a result, the burden on the crewmembers can be reduced, making it possible to reduce a risk of violating regulations due to human errors.

A ship operating method according to a fifth aspect of the present invention includes manually changing operating modes of a main engine and/or a generator engine based on an arrival time until arriving at an environment regulated marine zone displayed on the above-described display device or a departure time until departing from an environment regulated marine zone displayed on the display device.

With the ship operating method according to the fifth aspect of the present invention, the arrival distance and the arrival time until arriving at an environment regulated marine zone or the departure distance and the departure time until departing from an environment regulated marine zone are automatically computed by the first computation device of the environment-regulated-marine-zone detection device and are automatically displayed on the display device of the environment-regulated-marine-zone detection device.
By doing so, merely by viewing the display device, crewmembers instantly ascertain the arrival distance and the arrival time until arriving at an environment regulated marine zone or the departure distance and the departure time until departing from an environment regulated marine zone, and they can appropriately and quickly switch the operating modes (for example, fuel injection modes) of the main engine and/or the generator engine, which needs to be done in advance before entering the environment regulated marine zone or before leaving the environment regulated marine zone; as a result, the burden on the crewmembers can be reduced, making it possible to reduce a risk of violating regulations due to human errors.

A ship operating method according to a sixth aspect of the present invention includes manually changing driving sources of a propulsion propeller from a main engine to a shaft generator motor or from the shaft generator motor to the main engine based on an arrival time until arriving at an environment regulated marine zone displayed on the above-described display device or a departure time until departing from an environment regulated marine zone displayed on the display device.

With the ship operating method according to the sixth aspect of the present invention, the arrival distance and the arrival time until arriving at an environment regulated marine zone or the departure distance and the departure time until departing from an environment regulated marine zone are automatically computed by the first computation device of the environment-regulated-marine-zone detection device and are automatically displayed on the display device of the environment-regulated-marine-zone detection device.
By doing so, merely by viewing the display device, crewmembers instantly ascertain the arrival distance and the arrival time until arriving at an environment regulated marine zone or the departure distance and the departure time until departing from an environment regulated marine zone, and they can appropriately and quickly switch the driving sources, which needs to be done in advance before entering the environment regulated marine zone or before leaving the environment regulated marine zone; as a result, the burden on the crewmembers can be reduced, making it possible to reduce a risk of violating regulations due to human errors.

### {Advantageous Effects of Invention}

A navigation assistance system according to the present invention affords an advantage in that the burden on crewmembers can be reduced and a risk of violating regulations due to human errors can be reduced.

### {Brief Description of Drawings}

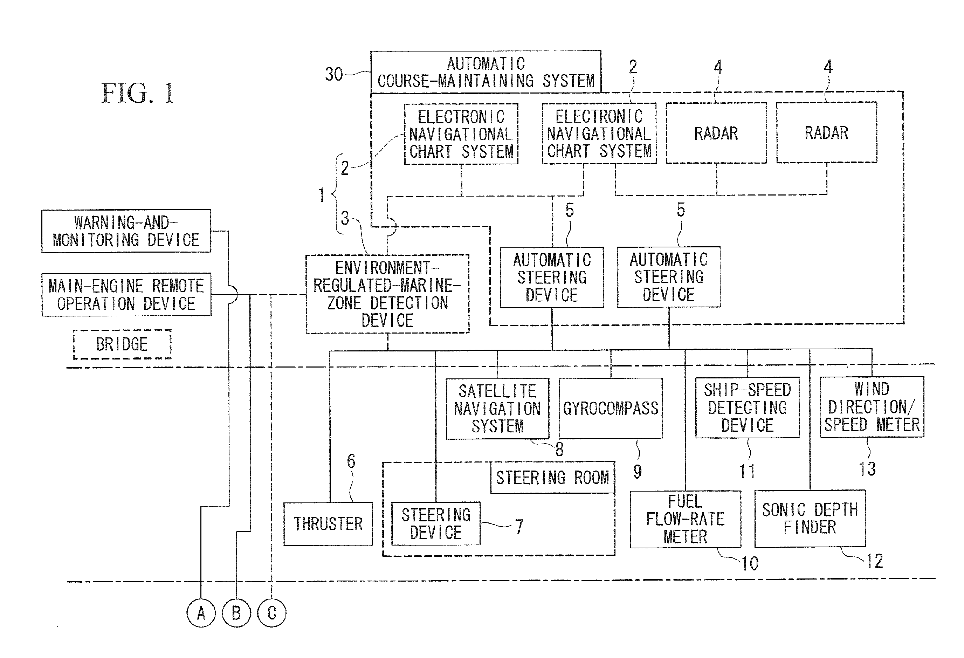

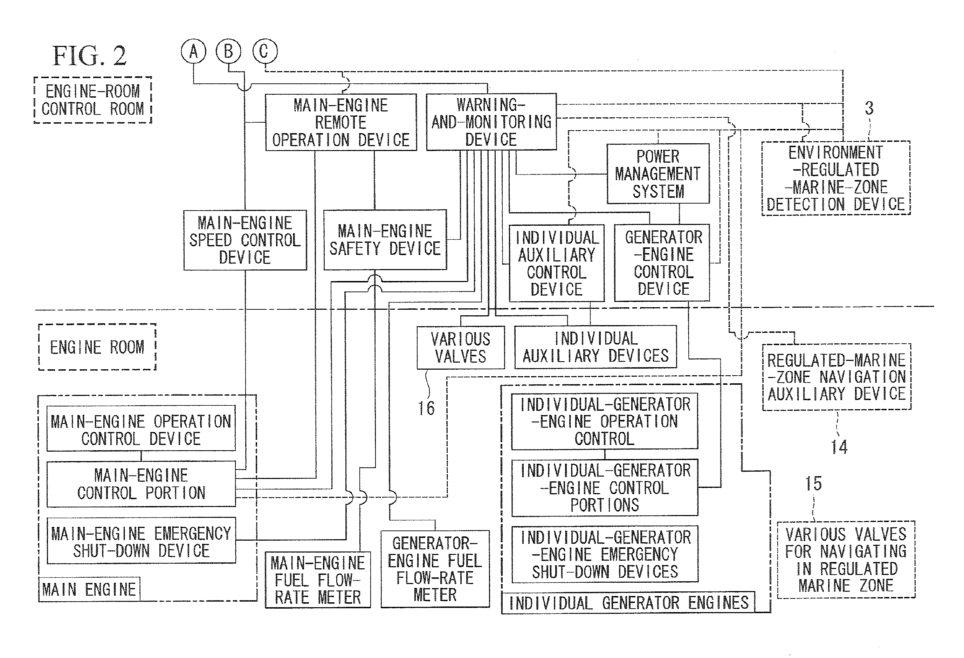

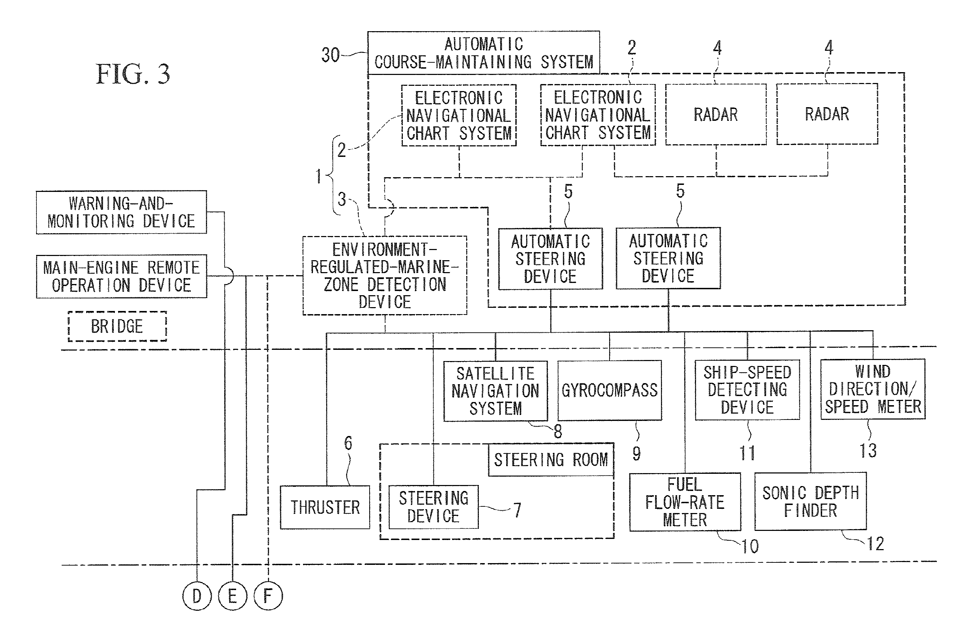

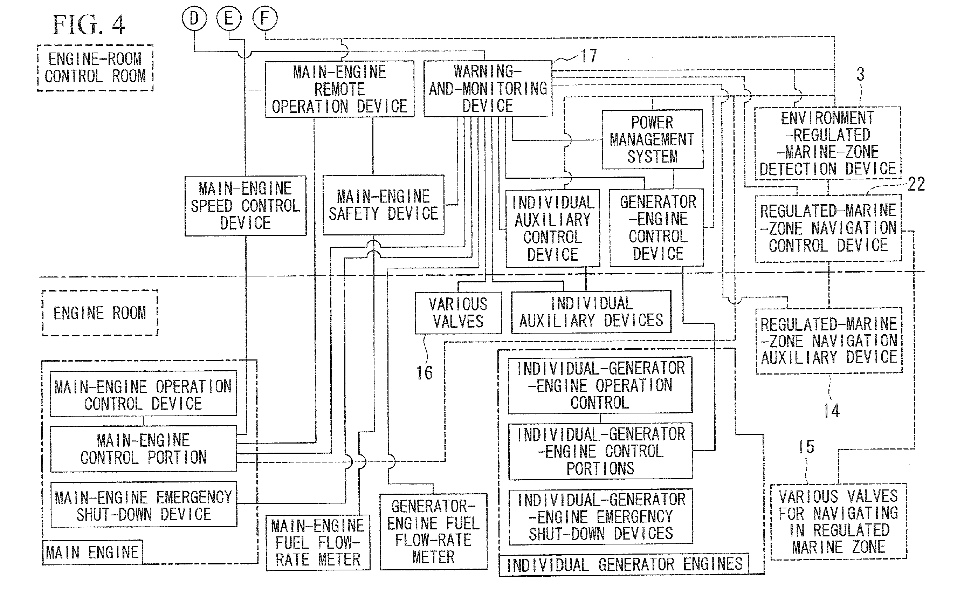

{Fig. 1} Fig. 1 is an equipment configuration diagram showing, in outline, the equipment configuration of a ship equipped with a navigation assistance system according to a first embodiment of the present invention.
{Fig. 2} Fig. 2 is an equipment configuration diagram showing, in outline, the equipment configuration of the ship equipped with the navigation assistance system according to the first embodiment of the present invention.
{Fig. 3} Fig. 3 is an equipment configuration diagram showing, in outline, the equipment configuration of a ship equipped with a navigation assistance system according to a second embodiment of the present invention.
{Fig. 4} Fig. 4 is an equipment configuration diagram showing, in outline, the equipment configuration of the ship equipped with the navigation assistance system according to the second embodiment of the present invention.

### {Description of Embodiments}

### {First Embodiment}

A navigation assistance system according to a first embodiment of the present invention will be described with reference to Figs. 1 and 2.
Figs. 1 and 2 are both equipment configuration diagram s showing, in outline, the equipment configuration of a ship equipped with the navigation assistance system according to this embodiment.

As shown in Figs. 1 and 2, the navigation assistance system 1 according to this embodiment is provided with an electronic navigational chart system 2 and an environment-regulated-marine-zone detection device 3.
The electronic navigational chart system 2 is connected to a radar 4 and an automatic steering device 5, and data output from the radar 4 and the automatic steering device 5 are input to the electronic navigational chart system 2.
The automatic steering device 5 is connected to a thruster 6, a steering device 7, a satellite navigation system (for example, a GPS: Global Positioning System) 8, a gyrocompass 9, a fuel flow-rate meter 10, a ship-speed detecting device 11, a sonic depth finder 12, and a wind direction/speed meter 13, and data output from the satellite navigation system 8, the gyrocompass 9, the ship-speed detecting device 11, and the wind direction/speed meter 13 are input to the electronic navigational chart system 2 via the automatic steering device 5.
Note that, in this embodiment, the electronic navigational chart system 2, the radar 4, and the automatic steering device 5 constitute an automatic course-maintaining system 30.

The environment-regulated-marine-zone detection device 3 is connected to the electronic navigational chart system 2, the satellite navigation system 8, the gyrocompass 9, the ship-speed detecting device 11, and the wind direction/speed meter 13, and one is installed in each of the bridge and the engine control room in the engine room. In addition, data output from the satellite navigation system 8, the gyrocompass 9, the ship-speed detecting device 11, and the wind direction/speed meter 13 are directly input to the environment-regulated-marine-zone detection device 3 without going through the automatic steering device 5.

The environment-regulated-marine-zone detection device 3 is provided with a movement tracking device (not shown), a (first) computation device (not shown), and a display device (not shown).
The movement tracking device receives inputs of data transmitted from the electronic navigational chart system 2, the satellite navigation system 8, the gyrocompass 9, the ship-speed detecting device 11, and the wind direction/speed meter 13, and the movement tracking device tracks (computes) the movement of the ship (position, heading, ship speed, course, oceanographic conditions, weather, and so forth for the ship) based on these data.

The computation device receives inputs of data transmitted from the movement tracking device, and, based on these data, as well as data about environment regulated marine zones in a built-in database of the computation device or data about environment regulated marine zones in a built-in database of another external device (for example, the electronic navigational chart system 2), the computation device computes an arrival distance and an arrival time until arriving at an environment regulated marine zone (distance and time until entering an environment regulated marine zone from an area outside the environment regulated marine zone) or a departure distance and a departure time until departing from an environment regulated marine zone (distance and time until leaving an environment regulated marine zone and entering an area outside the environment regulated marine zone).
The display device receives inputs of data transmitted from the computation device, and the display device displays the arrival distance and the arrival time until arriving at the environment regulated marine zone or the departure distance and the departure time until departing from the environment regulated marine zone.

Then, an engineer or an engine-room worker in the engine room performs switching of regulated-marine-zone navigation auxiliary devices 14 (which are installed in the engine room) and various valves 15 for navigating in the regulated marine zone based on the arrival time displayed on the display device, and also performs switching of various valves 16 (for normal navigation (for navigating outside the regulated marine zone)) based on the departure time displayed on the display device.
Here, the regulated-marine-zone navigation auxiliary devices 14 include a heater for heating the catalyst in an unillustrated urea-SCR (Selective Catalytic Reduction) system (exhaust-gas treating device), valves of supply pipes for ammonia solution or urea solution, and so forth, and, in order to use the urea-SCR system, the catalyst needs to be preheated by means of the heater, and preparations need to be made for supplying ammonia solution or urea solution.
In addition, a fuel tank (not shown) for navigating in the regulated marine zone holds low-sulfur fuel oil for navigating in the regulated marine zone, and, in the regulated marine zone, flow-path switching valves need to be switched in order to supply the low-sulfur fuel oil to the main engine and the individual generator engines from the fuel tank for navigating in the regulated marine zone.
On the other hand, a fuel tank (not shown) holds general fuel oil for navigating outside the regulated marine zone; outside the regulated marine zone, the general fuel oil is supplied to the main engine and the individual generator engines from the fuel tank; and, in order to use the general fuel oil in the fuel tank, the general fuel oil needs to be preheated by means of steam or the like, and the flow paths also need to be switched by means of the various valves 16.

With the navigation assistance system 1 according to this embodiment, the arrival distance and the arrival time until arriving at an environment regulated marine zone or the departure distance and departure time until departing from an environment regulated marine zone are automatically computed by the first computation device of the environment-regulated-marine-zone detection device 3 and are automatically displayed on the display device of the environment-regulated-marine-zone detection device 3.
By doing so, merely by viewing the display device, crewmembers instantly ascertain the arrival distance and the arrival time until arriving at an environment regulated marine zone or the departure distance and the departure time until departing from an environment regulated marine zone, and they can appropriately and quickly perform various preparatory work that needs to be done in advance before entering the environment regulated marine zone or before leaving the environment regulated marine zone; as a result, the burden on the crewmembers can be reduced, making it possible to reduce a risk of violating regulations due to human errors.

### {Second Embodiment}

A navigation assistance system according to a second embodiment of the present invention will be described with reference to Figs. 3 and 4.
Figs. 3 and 4 are both an equipment configuration diagrams showing, in outline, the equipment configuration of a ship equipped with the navigation assistance system according to this embodiment.

As shown in Figs. 3 and 4, a navigation assistance system 21 according to this embodiment differs from that of the first embodiment described above in that a regulated-marine-zone navigation control device 22 is provided. Because other components are the same as those of the first embodiment described above, descriptions of these components will be omitted herein.
Note that the same reference signs are assigned to the same components as those of the first embodiment described above, and descriptions thereof will be omitted.

The regulated-marine-zone navigation control device 22 is provided with a (second) computation device (not shown) and a control-signal outputting device (not shown), and is installed in the engine control room in the engine room.
As shown in Fig. 4, the computation device receives inputs of data transmitted from the environment-regulated-marine-zone detection device 3, and, based on these data, as well as data about the preparatory work in a built-in database of the computation device, the computation device computes an equipment-warm-up start time for the regulated-marine-zone navigation auxiliary devices 14 when entering an environment regulated marine zone from an area outside the environment regulated marine zone, and an equipment-shut-down time for the regulated-marine-zone navigation auxiliary devices 14 when leaving the environment regulated marine zone and entering an area outside the environment regulated marine zone.

The control-signal outputting device receives inputs of data transmitted from the computation device, and control signals are output to the regulated-marine-zone navigation auxiliary devices 14 based on these data so that the regulated-marine-zone navigation auxiliary devices 14 are automatically started up or shut down.

With the navigation assistance system 21 according to this embodiment, as the preparatory work before entering an environment regulated marine zone, the regulated-marine-zone navigation auxiliary devices 14 are automatically started up, and, additionally, as the preparatory work before leaving an environment regulated marine zone, the regulated-marine-zone navigation auxiliary devices 14 are automatically prepared for shut down.
By automating the preparatory work in this way, the burden on the crewmembers can be reduced further, making it possible to further reduce a risk of violating regulations due to human errors.

In addition, with the above-described embodiment, it is more preferable that, at the computation device, a switch start time be computed for the various valves 15 for navigating in a regulated marine zone when entering an environment regulated marine zone from an area outside the environment regulated marine zone, and a switch start time be computed for the various valves 16 for normal navigation when leaving an environment regulated marine zone and entering an area outside the environment regulated marine zone; that inputs of data transmitted from the computation device be received by the control-signal outputting device; and that, based on these data, control signals be output to the various valves 15 for navigating in a regulated marine zone or to the various valves 16 so that they are automatically opened and closed.
Dosing allows automatic switching of the various valves, for example, the flow-path switching valves between the fuel storage tank for normal navigation and the fuel storage tank for navigating in a regulated marine zone, valves for the urea supply pipes, and so forth.
By further automating the preparatory work in this way, the burden on the crewmembers can be further reduced, making it possible to further reduce a risk of violating regulations due to human errors.

Here, with the above-described embodiment, it is more preferable that NOx emission in an environment regulated marine zone be further reduced by changing (switching) operating modes of the main engine and/or the individual generator engines between outside the environment regulated marine zone and inside the environment regulated marine zone by performing normal fuel injection (injection of fuel oil alone) when outside the environment regulated marine zone, by mixing fuel oil and water to form an emulsion (emulsified liquid) and injecting this emulsion when inside the environment regulated marine zone, and so on.
By doing so, because the NOx emission is further reduced when inside the environment regulated marine zone, even if the exhaust-gas regulations are tightened for the environment regulated marine zone in the future, it is possible to adequately cope with such a situation.
Note that, in the case in which the operating modes of the main engine and the individual generator engines are changed between outside an environment regulated marine zone and inside the environment regulated marine zone, preparatory work associated with changing (switching) the operating modes (forming an emulsion by mixing fuel oil and water, and so forth) needs to be performed before entering the environment regulated marine zone from an area outside the environment regulated marine zone; in the case of the above-described first embodiment, this preparatory work will be manually performed by the engineer or the engine-room worker in the engine room, and, in the case of the above-described second embodiment, it will be automatically performed by means of the regulated-marine-zone navigation control device 22.

In addition, with the above-described embodiment, it is more preferable that the NOx emission in an environment regulated marine zone be further reduced by changing (switching) driving sources for rotating a propulsion propeller between outside the environment regulated marine zone and inside the environment regulated marine zone by operating the main engine to rotate the propulsion propeller (not shown) when outside the environment regulated marine zone, by operating the generator engines when inside the environment regulated marine zone so that the propulsion propeller is rotated by supplying power to a shaft generator motor (not shown), and so on.
By doing so, because the NOx emission is further reduced when inside the environment regulated marine zone, even if the exhaust-gas regulations are tightened for the environment regulated marine zones in the future, it is possible to adequately cope with such a situation.
Note that, in the case in which the driving sources for rotating the propulsion propeller are changed between outside an environment regulated marine zone and the inside an environment regulated marine zone, preparatory work associated with changing (switching) the driving sources (starting up a special (dedicated) generator engine for supplying power to the shaft generator motor, and so forth) needs to be performed before entering the environment regulated marine zone from an area outside the environment regulated marine zone; in the case of the above-described first embodiment, this preparatory work will be manually performed by the engineer or the engine-room worker in the engine room, and, in the case of the above-described second embodiment, it will be automatically performed by means of the regulated-marine-zone navigation control device 22.

Furthermore, in the second embodiment described above, it is more preferable that a recording device, such as a navigational-information recording device (not shown), a regulated-marine-zone navigation recording device (not shown), or the like, be additionally provided, and that a log of the control signals output from the control-signal outputting device of the regulated-marine-zone navigation control device 22, an operating (activating) log of the regulated-marine-zone navigation auxiliary devices 14, operating modes of the main engine and the individual generator engines, an operating (activating) log of the main engine, the individual generator engines, and/or the shaft generator motor, and so forth be recorded in the recording device and/or a warning-and-monitoring device 17.
By doing so, because the operating states of the main engine and various auxiliary equipment in the environment regulated marine zones are recorded in detail, it is easy to provide evidence of the operating states of the main engine and various auxiliary equipment in the environment regulated marine zones.

Note that the present invention is not limited to the embodiments described above, and it can appropriately be modified or altered as needed.
For example, in the above-described embodiments, cases in which the environment regulated marine zones are assumed to be the engine-exhaust-gas regulated marine zones (ECA: Emission Control Area) have been described; however, in addition to these, the environment regulated marine zones also include ballast water regulated marine zones.
In this case, ballast water and precipitated substances accumulated in a ballast tank (not shown) are manually or automatically discharged outside the ship before arriving at a ballast water regulated marine zone, and the record thereof is recorded in the recording device, such as a navigational-information recording device, a regulated-marine-zone navigation recording device, or the like, and/or the warning-and-monitoring device 17.

In addition, in the case in which the arrival time until arriving at an environment regulated marine zone (time until entering the environment regulated marine zone from an area outside the environment regulated marine zone) is reduced (becomes shorter), due to change of oceanographic conditions, weather, or the like, as compared with the arrival time until arriving at the environment regulated marine zone calculated by the computation device of the environment-regulated-marine-zone detection device 3, some time required for performing the preparatory work may be gained by decelerating.

### {Reference Signs List}

- 1: navigation assistance system
- 2: electronic navigational chart system
- 3: environment-regulated-marine-zone detection device
- 4: radar
- 5: automatic steering device
- 6: thruster
- 7: steering device
- 8: satellite navigation system
- 9: gyrocompass
- 10: fuel flow-rate meter
- 11: ship-speed detecting device
- 12: sonic depth finder
- 13: wind direction/speed meter
- 14: regulated-marine-zone navigation auxiliary device
- 15: various valves for navigating in a regulated marine zone
- 16: various valves for normal navigation
- 17: warning-and-monitoring device
- 21: navigation assistance system
- 22: regulated-marine-zone navigation control device
- 30: automatic course-maintaining system

## Claims

1. A navigation assistance system comprising:
an environment-regulated-marine-zone detection device which includes:
a movement tracking device that tracks the movement of a ship based on input data;
a first computation device that computes an arrival distance and an arrival time until arriving at an environment regulated marine zone or a departure distance and a departure time until departing from an environment regulated marine zone based on the data transmitted from the movement tracking device, as well as data about the environment regulated marine zone in a built-in database of the first computation device or data about the environment regulated marine zone in a built-in database of another external device; and
a display device that displays the arrival distance and the arrival time until arriving at the environment regulated marine zone or the departure distance and the departure time until departing from the environment regulated marine zone based on data transmitted from the first computation device.

2. A navigation assistance system according to Claim 1, further comprising:
a regulated-marine-zone navigation control device which includes:
a second computation device that computes a time at which a regulated-marine-zone navigation auxiliary device should be started up when entering an environment regulated marine zone from an area outside the environment regulated marine zone based on data transmitted from the environment-regulated-marine-zone detection device, as well as data about preparatory work in a built-in database of the second computation device; and
a control-signal outputting device that outputs a control signal to the regulated-marine-zone navigation auxiliary device based on data transmitted from the second computation device,
wherein the regulated-marine-zone navigation auxiliary device is automatically started up based on the control signal.

3. A navigation assistance system according to Claim 2,
wherein the second computation device includes a function for computing a time at which the regulated-marine-zone navigation auxiliary device should be shut down when leaving the environment regulated marine zone and entering an area outside the environment regulated marine zone based on data transmitted from the environment-regulated-marine-zone detection device, as well as data about preparatory work in the built-in database of the second computation device;
the control-signal outputting device includes a function for outputting a control signal to the regulated-marine-zone navigation auxiliary device based on the data transmitted from the second computation device; and
the regulated-marine-zone navigation auxiliary device is automatically shut down based on the control signal.

4. A navigation assistance system according to Claim 2 or 3,
wherein the second computation device computes a time at which switching of various valves for navigating in a regulated marine zone should be started;
the control-signal outputting device outputs control signals to the various valves for navigating in the regulated marine zone; and
the various valves for navigating in the regulated marine zone are switched based on the control signals.

5. A navigation assistance system according to Claim 2 or 3,
wherein operating modes of a main engine and/or a generator engine are automatically changed based on control signals output from the control-signal outputting device.

6. A navigation assistance system according to Claim 2 or 3,
wherein driving sources of a propulsion propeller are automatically changed from the main engine to a shaft generator motor or from the shaft generator motor to the main engine based on control signals output from the control-signal outputting device.

7. A navigation assistance system according to any one of Claims 1 to 6, further comprising a recording device that records a log of control signals output from the control-signal outputting device, an operating log of the regulated-marine-zone navigation auxiliary device, operating modes of the main engine and the generator engine, and an operating log of the main engine, the generator engine, and/or the shaft generator motor.

8. A ship equipped with a navigation assistance system according to any one of Claims 1 to 7.

9. A ship operating method comprising:
manually starting up a regulated-marine-zone navigation auxiliary device based on an arrival time until arriving at an environment regulated marine zone displayed on a display device recited in Claim 1; and
manually switching various valves for navigating in a regulated marine zone.

10. A ship operating method comprising:
manually shutting down a regulated-marine-zone navigation auxiliary device based on a departure time until departing from an environment regulated marine zone displayed on a display device recited in Claim 1; and
manually switching various valves for normal navigation.

11. A ship operating method comprising:
manually changing operating modes of a main engine and/or a generator engine based on an arrival time until arriving at an environment regulated marine zone displayed on a display device recited in Claim 1 or a departure time until departing from an environment regulated marine zone displayed on the display device.

12. A ship operating method comprising:
manually changing driving sources of a propulsion propeller from a main engine to a shaft generator motor or from the shaft generator motor to the main engine based on an arrival time until arriving at an environment regulated marine zone displayed on a display device recited in Claim 1 or a departure time until departing from an environment regulated marine zone displayed on the display device.
